(19) Europäisches Patentamt
European Patent Office
Office européen des brevets

(11) **EP 4 467 518 A1**

(12) **EUROPEAN PATENT APPLICATION**

(43) Date of publication:
**27.11.2024 Bulletin 2024/48**

(21) Application number: **24176342.4**

(22) Date of filing: **16.05.2024**

(51) International Patent Classification (IPC):
*C01G 53/00* $^{(2006.01)}$    *H01M 4/525* $^{(2010.01)}$

(52) Cooperative Patent Classification (CPC):
**C01G 53/42; C01G 53/006; C01G 53/50;
H01M 4/525;** C01P 2002/60

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.05.2023 KR 20230066449**

(71) Applicant: **SK On Co., Ltd.**
**Seoul 03161 (KR)**

(72) Inventors:
• **LEE, Sang Wook**
**34124 Daejeon (KR)**

• **LEE, Sang Han**
**34124 Daejeon (KR)**
• **LIM, Byoung Beom**
**34124 Daejeon (KR)**
• **BEAK, Min Cheol**
**34124 Daejeon (KR)**
• **CHO, Yong Hyun**
**34124 Daejeon (KR)**

(74) Representative: **Prüfer & Partner mbB**
**Patentanwälte · Rechtsanwälte**
**Sohnckestraße 12**
**81479 München (DE)**

(54) **CATHODE ACTIVE MATERIAL FOR LITHIUM SECONDARY BATTERY AND LITHIUM SECONDARY BATTERY INCLUDING THE SAME**

(57)     A cathode active material for a lithium secondary battery includes a lithium-transition metal oxide particle. A crystal index (CI) of the lithium-transition metal oxide particle is 15 or more. A lithium secondary includes a cathode including the cathode active material, and an anode facing the cathode. The cathode active material and the lithium secondary battery have improved operational reliability and thermal stability.

FIG. 1

**Description**

TECHINICAL FIELD

The disclosure of this patent application relates to a cathode active material for a lithium secondary battery and a lithium secondary battery including the same.

BACKGROUND

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source of an electric automobile, a hybrid vehicle, etc.

Examples of the secondary battery include a lithium secondary battery, a nickel-cadmium battery, a nickel-hydrogen battery, etc. The lithium secondary battery among the secondary batteries is being actively developed due to high operational voltage and energy density per unit weight, a high charging rate, a compact dimension, etc.

The lithium secondary battery may include a cathode and an anode.

As an application range of the lithium secondary batteries is being expanded, developments of the lithium secondary battery having higher capacity, longer life-span and higher operational stability are required. For example, operational stability of the lithium secondary battery may be degraded due to a structural deformation of a cathode active material included in the cathode.

SUMMARY

According to an aspect of the present disclosure, there is provided a cathode active material for a lithium secondary battery having improved operational reliability and thermal stability.

According to an aspect of the present disclosure, there is provided a lithium secondary battery having improved operational reliability and thermal stability.

A cathode active material for a lithium secondary battery includes a lithium-transition metal oxide particle that has a crystal index (CI) defined by Equation 1 of 15 or more.

[Equation 1]

$$CI = \frac{L(003) \times L(110)}{\eta \times 10000}$$

In Equation 1, CI is the crystal index, L(003) is a crystallite size (nm) in a (003) plane direction of the lithium-transition metal oxide particle measured through an X-ray diffraction (XRD) analysis, L(110) is a crystallite size (nm) in a (110) plane direction of the lithium-transition metal oxide particle measured through the XRD analysis, and $\eta$ is a lattice strain (dimensionless number) calculated by applying a Williamson-Hall method defined by Equation 2 to peaks of the lithium-transition metal oxide particle obtained from the XRD analysis.

[Equation 2]

$$\beta cos\theta = \eta sin\theta + \lambda/D$$

In Equation 2, $\beta$ is a full width at half maximum (rad) of a peak of the lithium-transition metal oxide particle obtained by the XRD analysis, $\theta$ is a diffraction angle (rad), and $\eta$ is the lattice strain (dimensionless number), $\lambda$ represents an X-ray wavelength (Å), and D represents a crystallite size (Å).

In some embodiments, the lattice strain of the lithium-transition metal oxide particle may be a slope of a straight line calculated by obtaining full widths at half maximum of all peaks in the XRD analysis, substituting the obtained full widths at half maximum into Equation 2, and plotting with $sin\theta$ as a horizontal axis and $\beta cos\theta$ as a vertical axis.

In some embodiments, L(003) of Equation 1 may be measured by Equation 3.

[Equation 3]

$$L(003) = \frac{0.9\lambda}{\beta cos\theta}$$

In Equation 3 above, L(003) represents the crystallite size (nm) in the (003) plane direction of the lithium-transition metal oxide particle, $\lambda$ represents an X-ray wavelength (nm), $\beta$ represents a full width at half maximum (FWHM) (rad) of a peak corresponding to the (003) plane of the lithium-transition metal oxide particle, and $\theta$ represents a diffraction angle (rad).

In some embodiments, L (110) in Equation 1 may be measured by Equation 4 below:

[Equation 4]

$$L(110) = \frac{0.9\lambda}{\beta cos\theta}$$

In Equation 4 above, L(110) represents the crystallite size (nm) in the (110) plane direction of the lithium-transition metal oxide particle, $\lambda$ represents an X-ray wavelength (nm), $\beta$ represents a full width at half maximum (FWHM) (rad) of a peak corresponding to the (110) plane of the lithium-transition metal oxide particle, and $\theta$ represents a diffraction angle (rad).

In some embodiments, the crystal index may be in a range from 15 to 120.

In some embodiments, L(003) in Equation 1 may be 300 nm or more.

In some embodiments, L(003) in Equation 1 may be in a range from 320 nm to 420 nm.

In some embodiments, L(110) in Equation 1 may be in a range from 120 nm to 300 nm.

In some embodiments, $\eta$ in Equation 1 may be 0.18 or less.

In some embodiments, the lithium-transition metal oxide particle may include a polycrystalline structure in a crystallographic aspect

In some embodiments, the lithium-transition metal oxide particles may have a composition represented by Chemical Formula 1-1.

[Chemical Formula 1-1]      $Li_xNi_aM1_{b1}M2_{b2}O_{2+z}$

In Chemical Formula 1-1, $0.9 \le x \le 1.2$, $0.5 \le a \le 0.99$, $0.01 \le b1+b2 \le 0.5$, $-0.5 \le z \le 0.1$, M1 may include at least one of Co, Mn and Al, and M2 may include at least one of Na, Ca, Nb, Ta, Mo, Zr, Ti, Cr, Cu, Zn, Sn, Ge, Ga, B, Mg, Ba, Si, Y, W, V and Sr. In some embodiments, M1 in Chemical Formula 1-1 may include Co and Mn.

A lithium secondary battery includes a cathode including the above-described cathode active material for a lithium secondary battery, and an anode facing the cathode.

According to an embodiment of the present disclosure, structural deformation of a cathode active material and ignition of a lithium secondary battery may be suppressed. Accordingly, high-temperature stability and operational reliability of the cathode active material and/or the lithium secondary battery may be improved.

According to an embodiment of the present disclosure, high temperature stability and operational reliability of the lithium secondary battery may be improved.

BRIEF DESCRIPTION OF THE DRAWINGS

FIG. 1 and FIG.2 are a schematic plan view and a cross-sectional view, respectively, illustrating a lithium secondary battery in accordance with example embodiments.

FIG. 3 is a cross-sectional image of a lithium-transition metal oxide particle of Example 1 obtained by a scanning electron microscope (SEM).

FIG. 4 is a cross-sectional image of a lithium-transition metal oxide particle of Comparative Example obtained by an SEM.

DETAILED DESCRIPTION OF THE EMBODIMENTS

Embodiments according to the present disclosure provide a cathode active material for a lithium secondary battery including a lithium-transition metal oxide particle and a lithium secondary battery including the cathode active material are provided.

Hereinafter, embodiments of the present disclosure will be described in detail. However, these embodiments are merely illustrative and the present inventive concepts are not limited to a specific exemplary embodiment.

A cathode active material for a lithium secondary battery (hereinafter, may be abbreviated as "a cathode active material") includes a lithium-transition metal oxide particle.

In example embodiments, the lithium-transition metal oxide particle may be provided as a compound capable of reversibly intercalating and de-intercalating lithium ions.

For example, the lithium-transition metal oxide particle may include a single crystalline or polycrystalline structure in a crystallographic aspect. In an embodiment, the lithium-transition metal oxide particle may include the polycrystalline structure.

For example, the lithium-transition metal oxide particle may be prepared by wet-mixing or dry-mixing a nickel-manganese-cobalt precursor (e.g., a nickel-cobalt-manganese hydroxide) with a lithium precursor (e.g., lithium hydroxide or lithium carbonate), and then calcining a product.

For example, the lithium-transition metal oxide particle may include nickel (Ni) and may further include at least one of cobalt (Co) or manganese (Mn).

For example, the lithium-transition metal oxide particle may include a layered structure or a crystal structure represented by Chemical Formula 1.

[Chemical Formula 1] $\quad\quad Li_xNi_aM_bO2_{+z}$

In Chemical Formula 1, $0.9 \leq x \leq 1.2$, $0.5 \leq a \leq 0.99$, $0.01 \leq b \leq 0.5$, and $-0.5 \leq z \leq 0.1$. As described above, M may include Co and/or Mn.

The chemical structure represented by Chemical Formula 1 represents a bonding relationship included in the layered structure or the crystal structure of the cathode active material or the lithium-transition nickel metal oxide particle, and does not exclude other additional elements. For example, M includes Co and/or Mn, and Co and/or Mn may serve as a main active element of the cathode active material together with Ni. Chemical Formula 1 is provided to express the bonding relationship of the main active element and is to be understood as a formula encompassing introduction and substitution of the additional elements.

In an embodiment, an auxiliary element for enhancing chemical stability of the cathode active material or the layered structure/crystal structure in addition to the main active element may be further included. The auxiliary element may be incorporated into the layered structure/crystal structure to form a bond, and this case is to be understood as being included within the range of the chemical structure represented by Chemical Formula 1.

The auxiliary element may include at least one of, e.g., Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may act as an auxiliary active element such as Al that contributes to capacity/power activity of the cathode active material together with Co or Mn.

For example, the cathode active material or the lithium-transition metal oxide particle may include a layered structure or a crystal structure represented by Chemical Formula 1-1.

[Chemical formula 1-1] $\quad\quad Li_xNi_aM1_{b1}M2_{b2}O_{2+z}$

In Chemical Formula 1-1, M1 may include Co, Mn and/or Al. M2 may include the above-described auxiliary element. In Chemical Formula 1-1, $0.9 \leq x \leq 1.2$, $0.5 \leq a \leq 0.99$, $0.01 \leq b1+b2 \leq 0.5$, and $-0.5 \leq z \leq 0.1$.

The cathode active material above may further include a doping element. For example, elements substantially the same as or similar to the above-described auxiliary elements may be used as the doping element. For example, the above-described elements may be used alone or in a combination of two or more therefrom as the doping element.

The doping element may be present on a surface of the lithium-transition metal oxide particle, or may penetrate through the surface of the lithium-transition metal oxide particle to be included in the bonding structure represented by Chemical Formula 1 or Chemical Formula 1-1.

The cathode active material may include a nickel-cobalt-manganese (NCM)-based lithium oxide. In this case, an NCM-based lithium oxide having an increased nickel content may be used.

Ni may be provided as a transition metal related to the power and capacity of the lithium secondary battery. Thus, as described above, a high-capacity cathode and a high-capacity lithium secondary battery may be implemented using a high-Ni composition in the cathode active material.

However, as the content of Ni increases, long-term storage stability and life-span stability of the cathode or the secondary battery may be relatively lowered, and side reactions with an electrolyte may also be increased. However, according to example embodiments, life-span stability and capacity retention properties may be improved using Mn while maintaining an electrical conductivity by Co.

The content of Ni in the NCM-based lithium oxide (e.g., a mole fraction of nickel based on the total number of moles of nickel, cobalt and manganese) may be 0.5 or more, 0.6 or more, 0.7 or more, 0.8 or more, 0.9 or more, or 95 or more. In some embodiments, the content of Ni may be in a range from 0.8 to 0.98, from 0.82 to 0.98, from 0.83 to 0.98, from 0.85 to 0.98, from 0.88 to 0.98, or from 0.9 to 0.98.

For example, a crystallite size and a lattice strain of the lithium-transition metal oxide particle may be adjusted to improve high-temperature stability and operational reliability of the lithium secondary battery.

The lithium-transition metal oxide particle according to embodiments of the present disclosure has a crystal index CI defined by Equation 1 below of 15 or more.

[Equation 1]

$$CI = \frac{L(003) \times L(110)}{\eta \times 10000}$$

In Equation 1, CI is the crystal index, L(003) is a crystallite size (nm) in a (003) plane direction of the lithium-transition metal oxide particle measured through an X-ray diffraction (XRD) analysis, L(110) is a crystallite size (nm) in a (110) plane direction of the lithium-transition metal oxide particle measured through the XRD analysis, and $\eta$ is a lattice strain (dimensionless number) calculated by applying a Williamson-Hall method defined by Equation 2 below to peaks of the lithium-transition metal oxide particle obtained from the XRD analysis.

[Equation 2]

$$\beta\cos\theta = \eta\sin\theta + \lambda/D$$

In Equation 2, $\beta$ is a full width at half maximum (FWHM) (rad) of a peak of the lithium-transition metal oxide particle obtained by the XRD analysis, $\theta$ is a diffraction angle (rad), and $\eta$ is a lattice strain (dimensionless number), $\lambda$ represents an X-ray wavelength (Å), and D represents a crystallite size (Å).

In the crystal index range, the lattice strain may be decreased and the crystallite size may be increased, thereby suppressing structural deformation of the cathode active material and ignition of the lithium secondary battery. Accordingly, high-temperature stability and operation reliability of the cathode active material and/or the lithium secondary battery may be improved.

According to some embodiments, the crystal index may be in a range from 15 to 120. Within the above range, high-temperature stability and life-span characteristics may be further improved while sufficiently achieving capacity characteristics of the lithium secondary battery.

For example, peaks may be obtained through the XRD analysis, and the lattice strain can be obtained by substituting the obtained peaks into Equation 2 (Williamson-Hall method).

For example, in some embodiments, in Equation 2 above, $\beta$ may represent a FWHM obtained by correcting a value derived from an equipment. In an embodiment, Si may be used as a standard material for reflecting the equipment-derived value. In this case, the equipment-derived FWHM may be expressed as a function of $2\theta$ by plotting a FWHM profile in an entire $2\theta$ range of Si. Thereafter, a value obtained by subtracting and correcting the equipment-derived FWHM value at the corresponding $2\theta$ from the function may be used as $\beta$.

For example, the XRD analysis may be performed on a dried powder of the lithium-transition metal oxide particles using a Cu K$\alpha$ ray as a light source, at a diffraction angle ($2\theta$) range of 10° to 120°, and a scan rate of 0.0065 °/step.

In some embodiments, after measuring full widths at half maximum of all peaks appearing in the diffraction angle range, the obtained measured values can be substituted into Equation 2 to obtain a slope through a linear regression analysis to calculate the lattice strain (Williamson-Hall method).

For example, the lattice strain can be defined as a slope of a straight line obtained when plotting Equation 2 with $\sin\theta$ as a horizontal axis and $\beta\cos\theta$ as a vertical axis.

In some embodiments, the lattice strain may be 0.18 or less. In this range, the lattice strain in a boundary region between crystal grains or between the lithium-transition metal oxide particles may be sufficiently reduced. Accordingly, particle cracks occurring in the boundary region between the crystal grains during a pressing process for forming the cathode or during charging and discharging may be reduced. Thus, a particle strength of the lithium-transition metal oxide particle may be enhanced and an electrode density may be increased.

In some embodiments, a crystallite size (L(003)) of the lithium-transition metal oxide particle in the (003) plane direction may be measured from a Scherrer equation represented by Equation 3 below.

[Equation 3]

$$L(003) = \frac{0.9\lambda}{\beta \cos\theta}$$

In Equation 3 above, L(003) represents the crystallite size (nm) in the (003) plane direction of the lithium-transition metal oxide particle, $\lambda$ represents an X-ray wavelength (nm), $\beta$ represents a full width at half maximum (FWHM) (rad) of a peak corresponding to the (003) plane of the lithium-transition metal oxide particle, and $\theta$ represents a diffraction angle (rad).

In some embodiments, L(003) may be 300 nm or more, and, in an embodiment, L(003) may be in a range from 320 nm to 420 nm. Within the above range, structural stability of the cathode active material may be sufficiently improved. Accordingly, high-temperature stability and operation reliability of the lithium secondary battery may be further improved.

In some embodiments, a crystallite size (L(110)) of the lithium-transition metal oxide particle in a (110) plane direction may be measured through a Scherrer equation represented by Equation 4 below.

[Equation 4]

$$L(110) = \frac{0.9\lambda}{\beta \cos\theta}$$

In Equation 4 above, L(110) represents the crystallite size (nm) in the (110) plane direction of the lithium-transition metal oxide particle, $\lambda$ represents an X-ray wavelength (nm), $\beta$ represents a full width at half maximum (FWHM) (rad) of a peak corresponding to the (110) plane of the lithium-transition metal oxide particle, and $\theta$ represents a diffraction angle (rad).

In some embodiments, L(110) may be in a range from 120 nm to 300 nm. Within the above range, a crystallite shape of the lithium-transition metal oxide particles may be adjusted to improve structural stability.

In some embodiments, in Equations 3 and 4, $\beta$ may represent a FWHM obtained by correcting a value derived from an equipment. In an embodiment, Si may be used as a standard material for reflecting the equipment-derived value. In this case, the equipment-derived FWHM may be expressed as a function of $2\theta$ by plotting a FWHM profile in an entire $2\theta$ range of Si. Thereafter, a value obtained by subtracting and correcting the equipment-derived FWHM value at the corresponding $2\theta$ from the function may be used as $\beta$.

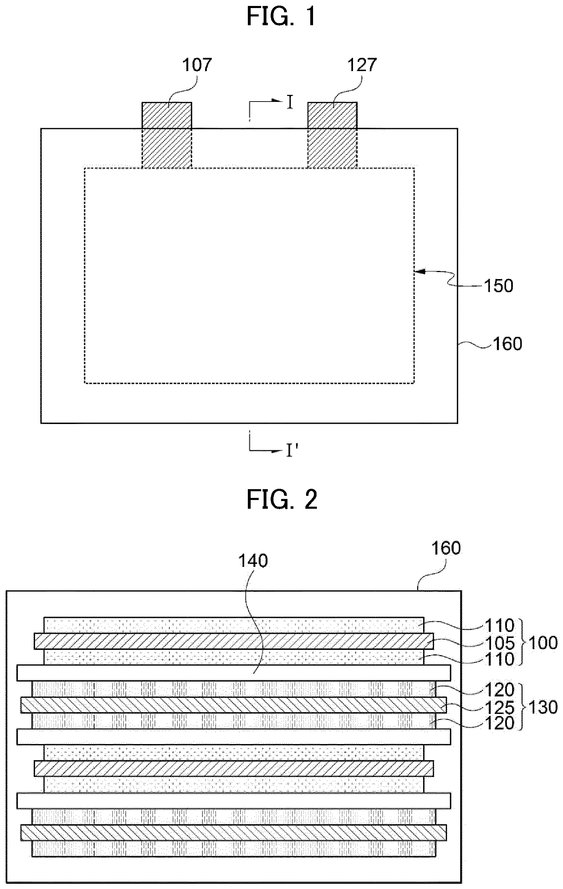

FIGS. 1 and 2 are a schematic plan view and a cross-sectional view, respectively, illustrating a lithium secondary battery in accordance with example embodiments. For example, FIG. 2 is a cross-sectional view taken along line I-I' of FIG. 1 in a thickness direction.

The structure illustrated in FIGS. 1 and 2 is only an example for convenience of descriptions, and the lithium secondary battery provided by the present disclosure is not limited to the structure of FIGS. 1 and 2.

The lithium secondary battery includes a cathode 100 including the cathode active material that includes the above-described lithium-transition metal oxide particle and an anode 130 facing the cathode 100.

The cathode 100 may include a cathode current collector 105 and a cathode active material layer 110 formed on at least one surface of the cathode current collector 105.

The cathode current collector 105 may include stainless steel, nickel, aluminum, titanium or an alloy thereof. The cathode current collector 105 may include aluminum or stainless steel surface treated with carbon, nickel, titanium, silver, etc. For example, a thickness of the cathode current collector 105 may be in a range from 10 $\mu$m to 50 $\mu$m

The cathode active material includes a plurality of the above-described lithium-nickel metal oxide particles. For example, a content of the lithium-transition metal oxide particles may be 50 weight percent (wt%) or more based on a total weight of the cathode active material. In some embodiments, the content of the lithium-transition metal oxide particles may be 60 wt% or more, 70 wt% or more, 80 wt% or more, or 90 wt% or more based on the total weight of the cathode active material.

In an embodiment, the cathode active material may substantially consist of the lithium-transition metal oxide particles.

A cathode slurry can be prepared by mixing the cathode active material in a solvent. The cathode slurry may be coated on at least one side of the cathode current collector 105, then dried and pressed to form the cathode active material layer 110. The coating method may include a gravure coating, a slot die coating, a multi-layer simultaneous die coating, an imprinting, a doctor blade coating, a dip coating, a bar coating, a casting, etc. The cathode active material layer 110 may further include a binder, and may optionally further include a conductive material, a thickener, etc.

N-methyl-2-pyrrolidone (NMP), dimethylformamide, dimethylacetamide, N, N-dimethylaminopropylamine, ethylene oxide, tetrahydrofuran, etc., may be used as the solvent.

The binder may include polyvinylidenefluoride (PVDF), poly(vinylidene fluoride-co-hexafluoropropylene), polyacrylonitrile, polymethyl methacrylate, acrylonitrile butadiene rubber (NBR), polybutadiene rubber (BR), styrene-butadiene rubber (SBR), etc. These may be used alone or in a combination of two or more therefrom.

In an embodiment, a PVDF-based binder may be used as the cathode binder. In this case, an amount of the binder for forming the cathode active material layer 110 may be reduced, and an amount of the cathode active material may be relatively increased. Accordingly, the power and capacity properties of the secondary battery may be improved.

The conductive material may be added to promote a conductivity of the cathode active material layer 110 and/or a mobility of lithium ions or electrons. For example, the conductive material may include a carbon-based conductive material such as graphite, carbon black, acetylene black, Ketjen black, graphene, carbon nanotube, a VGCF (vapor-grown carbon fiber), a carbon fiber, etc., and/or a metal-based conductive material including tin, tin oxide, a perovskite material such as titanium oxide, $LaSrCoO_3$, $LaSrMnO_3$, etc. These may be used alone or in a combination of two or more therefrom.

The cathode slurry may further include a thickener and/or a dispersant. In an embodiment, the cathode slurry may include the thickener such as carboxymethyl cellulose (CMC).

The anode 130 may include an anode current collector 125 and an anode active material layer 120 formed on at least one surface of the anode current collector 125.

For example, the anode current collector 125 may include a copper foil, a nickel foil, a stainless steel foil, a titanium foil, a nickel foam, a copper foam, a polymer substrate coated with a conductive metal, etc. These may be used alone or in a combination of two or more therefrom. For example, a thickness of the anode current collector 125 may be in a range from 10 $\mu$m to 50 $\mu$m.

The anode active material layer 120 may include an anode active material. A material capable of adsorbing and desorbing lithium ions may be used as the anode active material. For example, the anode active material may include a carbon-based material such as a crystalline carbon, an amorphous carbon, a carbon composite, a carbon fiber, etc. ; a lithium metal; a lithium alloy; a silicon (Si)-containing material or a tin (Sn)-containing material, etc. These may be used alone or in a combination of two or more therefrom.

The amorphous carbon may include hard carbon, soft carbon, coke, a mesocarbon microbead (MCMB), a mesophase pitch-based carbon fiber (MPCF), etc.

The crystalline carbon may include a graphite-based carbon such as natural graphite, artificial graphite, a graphitized coke, a graphitized MCMB, a graphitized MPCF, etc.

The lithium metal may include a pure lithium metal and/or a lithium metal having a protective layer thereon for suppressing a dendrite growth. In an embodiment, a lithium metal-containing layer deposited or coated on the anode current collector 125 may be used as the anode active material layer 120. In an embodiment, a lithium thin film may be used as the anode active material layer 120.

Examples of an element included in the lithium alloy may include aluminum, zinc, bismuth, cadmium, antimony, silicon, lead, tin, gallium, indium, etc. These may be used alone or in a combination of two or more therefrom.

The silicon-containing material may provide more increased capacity properties. The silicon-containing material may include Si, SiOx (0<x<2), a metal-doped SiOx (0<x<2), a silicon-carbon composite, etc.

The metal may include lithium and/or magnesium, and the metal-doped SiOx (0<x<2) may include a metal silicate.

The anode active material above may be mixed in a solvent to prepare an anode slurry. The anode slurry may be coated/deposited on the anode current collector 125, and then dried and pressed to prepare the anode active material layer 120. The coating may include a gravure coating, a slot die coating, a multi-layer simultaneous die coating, an imprinting, a doctor blade coating, a dip coating, a bar coating, a casting, etc. The anode active material layer 120 may further include a binder, and may optionally further include a conductive material, a thickener, etc.

The solvent included in the anode slurry may include water, pure water, deionized water, distilled water, ethanol, isopropanol, methanol, acetone, n-propanol, t-butanol, etc. These may be used alone or in a combination of two or more therefrom.

The above-described materials used to fabricate the cathode 100 may also be used as the binder, the conductive material and the thickener.

In some embodiments, a styrene-butadiene rubber (SBR)-based binder, carboxymethyl cellulose (CMC), a polyacrylic acid-based binder, poly(3,4-ethylenedioxythiophene) (PEDOT)-based binder, etc., may be used as the anode binder. These may be used alone or in a combination of two or more therefrom.

In example embodiments, a separator 140 may be interposed between the cathode 100 and the anode 130. The separator 140 may be formed to prevent an electrical short between the cathode 100 and the anode 130 and to generate flow of ions. For example, a thickness of the separator may be in a range from 10 $\mu$m to 20 $\mu$m.

For example, the separator 140 may include a porous polymer film or a porous nonwoven fabric.

The porous polymer film may include a polyolefin-based polymer such as an ethylene polymer, a propylene polymer, an ethylene/butene copolymer, an ethylene/hexene copolymer, an ethylene/methacrylate copolymer, etc. These may be used alone or in a combination of two or more therefrom.

The porous nonwoven fabric may include a glass fiber having a high melting point, a polyethylene terephthalate fiber, etc.

The separator 140 may further include a ceramic-based material. For example, inorganic particles may be coated on a polymer film or dispersed in the polymer film to improve a heat resistance.

The separator 140 may have a single-layered or a multi-layered structure including the above-described polymer film and/or the nonwoven fabric.

In example embodiments, an electrode cell may be defined by the cathode 100, the anode 130 and the separator 140, and a plurality of the electrode cells may be stacked to form an electrode assembly 150 in the form of, e.g., a jelly roll. For example, the electrode assembly 150 may be formed by winding, stacking, zigzag folding, stack-folding, etc., of the separator 140.

For example, the electrode assembly 150 may be accommodated together with an electrolyte in a case 160 to define the lithium secondary battery. In example embodiments, a non-aqueous electrolyte solution may be used as the electrolyte.

The non-aqueous electrolyte solution may include a lithium salt and an organic solvent. The lithium salt may be represented by $Li^+X^-$, and an anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N$; $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

For example, the organic solvent may include propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethylpropionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, dimethoxyethane, diethoxyethane, sulfolane, gamma-butyrolactone, propylene sulfite, etc. These may be used alone or in a combination of two or more therefrom.

The non-aqueous electrolyte solution may further include an additive. The additive may include, e.g., a cyclic carbonate-based compound, a fluorine-substituted carbonate-based compound, a sultone-based compound, a cyclic sulfate-based compound, a cyclic sulfite-based compound, a phosphate-based compound, a borate-based compound, etc. These may be used alone or in a combination of two or more therefrom.

The cyclic carbonate-based compound may include vinylene carbonate (VC), vinyl ethylene carbonate (VEC), etc.

The fluorine-substituted cyclic carbonate-based compound may include fluoroethylene carbonate (FEC).

The sultone-based compound may include 1,3-propane sultone, 1,3-propene sultone, 1,4-butane sultone, etc.

The cyclic sulfate-based compound may include 1,2-ethylene sulfate, 1,2-propylene sulfate, etc.

The cyclic sulfite-based compound may include ethylene sulfite, butylene sulfite, etc.

The phosphate-based compound may include lithium difluoro bis-oxalato phosphate, lithium difluoro phosphate, etc.

The borate-based compound may include lithium bis(oxalate) borate.

In some embodiments, a solid electrolyte may be used instead of the non-aqueous electrolyte solution described above. In this case, the lithium secondary battery may be fabricated in the form of an all-solid-state battery. Additionally, a solid electrolyte layer may be disposed between the cathode 100 and the anode 130 instead of the above-described separator 140.

The solid electrolyte may include a sulfide-based electrolyte. Non-limiting examples of the sulfide-based electrolyte may include $Li_2S-P_2S_5$, $Li_2S-P_2S_5-LiCl$, $Li_2S-P_2S_5-LiBr$, $Li_2S-P_2S_5-LiCl-LiBr$, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are positive numbers, and Z is Ge, Zn or Ga), $Li_2S-GeS_2$, $Li_2S-SiS_2-Li_3PO_4$, $Li_2S-SiS_2-Li_pMO_q$, (p and q are positive numbers, M is P, Si, Ge, B, Al, Ga or In), $Li_7-xPS_6-xCl_x$ ($0 \leq x \leq 2$), $Li_7-xPS_6-xBr_x$ ($0 \leq x \leq 2$), $Li_7-xPS_6-xI_x$

(0≤x≤2), etc. These may be used alone or in a combination thereof.

In an embodiment, the solid electrolyte may include, e.g., an oxide-based amorphous solid electrolyte such as $Li_2O$-$B_2O_3$-$P_2O_5$, $Li_2O$-$SiO_2$, $Li_2O$-$B_2O_3$, $Li_2O$-$B_2O_3$-$ZnO$, etc.

As illustrated in FIG. 1 and 2, electrode tabs (a cathode tab and an anode tab) may protrude from the cathode current collector 105 and the anode current collector 125 included in each electrode cell to one side of the case 160. The electrode tabs may be welded together with the one side of the case 160 to be connected to an electrode lead (a cathode lead 107 and an anode lead 127) that may be extended or exposed to an outside of the case 160.

The lithium secondary battery may be manufactured in, e.g., a cylindrical shape using a can, a prismatic shape, a pouch shape or a coin shape.

Hereinafter, embodiments of the present disclosure are described in more detail with reference to experimental examples.

Example 1

Preparation of lithium-transition metal oxide particle

NiSO4, CoSO4 and MnSO4 were mixed in a molar ratio of 0.94:0.03:0.03, respectively, using distilled water bubbled with $N_2$ for 24 hours to remove internal dissolved oxygen. The solution was added to a reactor at 55°C, and a co-precipitation reaction proceeded for 120 to 168 hours using NaOH and $NH_3H_2O$ as a precipitant and a chelating agent, respectively, to obtain $Ni_{0.94}Co_{0.03}Mn_{0.03}(OH)_2$ as a transition metal precursor. The obtained precursor was dried at 80°C for 12 hours and then re-dried at 110°C for 12 hours.

Lithium hydroxide and the transition metal precursor were added to a dry high-speed mixer in a molar ratio of (1.04-1.06): 1 and mixed uniformly for 5 minutes. The mixture was placed in a firing furnace, heated to a temperature of 650°C to 750°C at a ramping rate of 2°C/min, and maintained at the temperature for 5 to 8 hours. Oxygen was passed continuously at a flow rate of 10 mL/min during increasing and maintaining the temperature. After the firing, natural cooling was performed to room temperature, and then pulverized and classified to produce lithium-transition metal oxide particles having a composition of $LiNi_{0.94}Co_{0.03}Mn_{0.03}O_2$.

Fabrication of lithium secondary battery

A lithium secondary battery was manufactured using the lithium-transition metal oxide particles as a cathode active material.

Specifically, the cathode active material, Denka Black as a conductive material and PVDF as a binder were mixed in a mass ratio of 93:5:2, respectively, to prepare a cathode slurry. The cathode slurry was coated on an aluminum current collector (thickness: 15 $\mu$m), vacuum-dried at 130°C, and then pressed to prepare a cathode.

An anode slurry containing 93 wt% of natural graphite as an anode active material, 5 wt% of KS6 as a flake-type conductive material, 1 wt% of styrene-butadiene rubber (SBR) as a binder and 1 wt% of carboxymethyl cellulose (CMC) as a thickener was prepared. The anode slurry was coated, dried and pressed on a copper substrate to prepare an anode.

The cathode and the anode prepared as described above were notched in a predetermined size and stacked with a separator (polyethylene, thickness: 15 $\mu$m) interposed therebetween to form an electrode cell. Tab portions of the anode and cathode were welded. The welded anode/separator/cathode assembly was put in a pouch, and three sides except for an electrolyte injection side were sealed. Regions around the tab portions were included in the sealing portion. An electrolyte solution was injected through the electrolyte injection side, and then the electrolyte injection side was also sealed and an impregnation as performed for 12 hours or more.

In the preparation of the electrolyte solution, a 1M $LiPF_6$ solution was prepared using a mixed solvent of EC/EMC (30/70 (volume ratio), and 1 wt% of vinylene carbonate (VC), 0.5 wt% of 1,3-propensultone (PRS) and 0.5 wt% of lithium bis(oxalato)borate (LiBOB) were added.

Examples 2 to 7 and Comparative Examples 1 to 3

Lithium-transition metal oxide particles having various crystallite sizes and lattice strains were prepared by varying a firing temperature, a firing time, a cooling temperature and cooling time when preparing lithium-transition metal oxide particles. Thereafter, particles having crystallite sizes in a (003) plane direction, crystallite sizes in a (110) plane direction and lattice strains as shown in Table 2 below were used as the cathode active materials of Examples 2 to 7 and Comparative Examples 1 to 3.

The lithium-transition metal oxide particles and lithium secondary batteries were manufactured by the same method as that in Example 1, except for the above details.

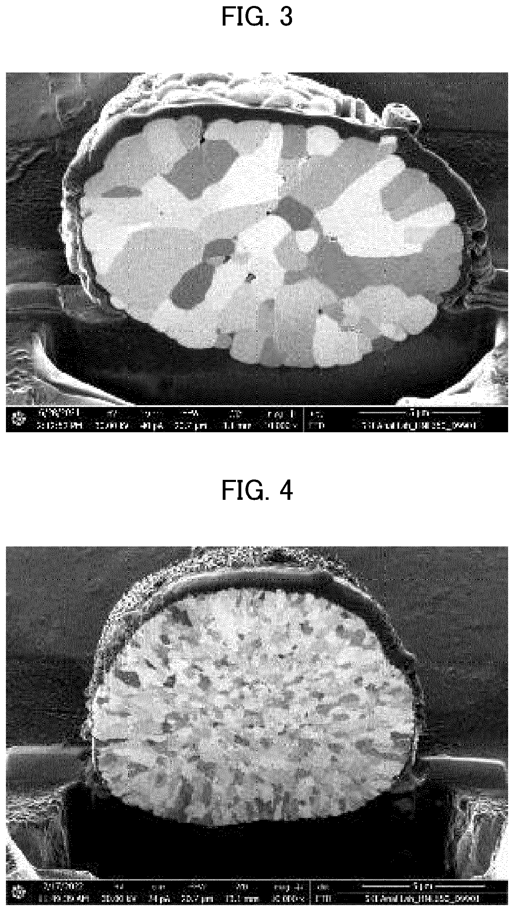

FIG. 3 is a cross-sectional image of a lithium-transition metal oxide particle of Example 1 obtained by a scanning electron microscope (SEM).

FIG. 4 is a cross-sectional image of a lithium-transition metal oxide particle of Comparative Example obtained by an SEM.

Referring to FIGS. 3 and 4, the lithium-transition metal oxide particle of Example 1 had a crystal index of 15 or more, and thus the number of crystal grains per unit area is smaller than the number of crystal grains per unit area of the lithium-transition metal oxide particle of Comparative Example 1. Accordingly, high temperature stability may be improved.

Experimental Example

(1) XRD Analysis

1) Measurement of crystallite size

The lithium-transition metal oxide particles prepared according to Examples and Comparative Examples were subjected to an XRD analysis and Equation 3 to calculate a crystallite size (L(003)) in the (003) plane direction.

The lithium-transition metal oxide particles prepared according to Examples and Comparative Examples were subjected to the XRD analysis and Equation 4 to calculate a crystallite size (L(110)) in the (110) plane direction (110).

2) Measurement of lattice strain

The lithium-transition metal oxide particles prepared according to Examples and Comparative Examples were subjected to an XRD analysis and Equation 2 to calculate a lattice deformation ($\eta$).

3) Calculation of crystal index (CI)

The crystal index (CI) was calculated by substituting the measured L(003), L(110) and $\eta$ into Equation 1.

Specific XRD analysis equipment/conditions are shown in Table 1 below.

[Table 1]

| XRD(X-Ray Diffractometer) EMPYREAN | |
| --- | --- |
| Maker | PANalytical |
| Anode material | Cu |
| K-Alpha1 wavelength | 1.540598 Å |
| Generator voltage | 45 kV |
| Tube current | 40 mA |
| Scan Range | 10~120° |
| Scan Step Size | 0.0065° |
| Divergence slit | 1/4° |
| Antiscatter slit | 1/2° |

(2) Measurement of onset temperature in differential scanning calorimeter (DSC)

Each lithium secondary battery manufactured according to the above-described Examples and Comparative Examples was disassembled, the cathode was recovered, washed with DMC and dried. After punching the dried cathode with a 3 mm punching machine, the cathode was placed in an internal pressure cell for a DSC measurement and 2.5 $\mu$l of an electrolyte solution was added. A gold-plated disk was placed and the internal pressure cell was sealed to prepare an internal pressure cell for a DSC evaluation.

The prepared internal pressure cell for the DSC evaluation was left for 12 hours or more, and then introduced into a DSC device (DSC1 STAR system, METTLER TOLEDO) and analyzed while ramping to 400°C at a rate of 5°C/min in an $N_2$ atmosphere. As a result of the analysis, a temperature at which a first exothermic peak generated (e.g., a temperature at which oxygen is released in the cathode active material) was measured.

The measured temperature was evaluated as a DSC onset temperature.

(3) Evaluation on high temperature stability - Initial ignition temperature (°C)

The lithium secondary batteries prepared according to the above-described Examples and Comparative Examples were put into a heating chamber, and heated to measure an initial ignition temperature.
The measurement and evaluation results are shown in Table 2 and Table 3 below.

[Table 2]

|  | L(003) (nm) | L(110) (nm) | lattice strain | crystal index |
|---|---|---|---|---|
| Example 1 | 326 | 128 | 0.18 | 23.2 |
| Example 2 | 401 | 281 | 0.10 | 112.7 |
| Example 3 | 287 | 104 | 0.19 | 15.7 |
| Example 4 | 420 | 297 | 0.10 | 124.7 |
| Example 5 | 315 | 117 | 0.17 | 21.7 |
| Example 6 | 412 | 306 | 0.11 | 114.6 |
| Example 7 | 295 | 122 | 0.18 | 20.0 |
| Comparative Example 1 | 167 | 69 | 0.38 | 3.0 |
| Comparative Example 2 | 211 | 73 | 0.26 | 5.9 |
| Comparative Example 3 | 302 | 79 | 0.18 | 13.3 |

[Table 3]

|  | DSC onset temperature (°C) | initial ignition temperature (°C) |
|---|---|---|
| Example 1 | 213.8 | 181.7 |
| Example 2 | 219.9 | 184.2 |
| Example 3 | 190.8 | 162.0 |
| Example 4 | 208.5 | 173.1 |
| Example 5 | 202.3 | 171.6 |
| Example 6 | 210.1 | 178.3 |
| Example 7 | 196.2 | 170.1 |
| Comparative Example 1 | 188.9 | 148.2 |
| Comparative Example 2 | 189.2 | 152.9 |
| Comparative Example 3 | 190.0 | 153.6 |

Referring to Tables 2 and 3, in Examples using the lithium-transition metal oxide particles having the crystal index of 15 or higher, high-temperature stability and operational reliability were improved compared to those from Comparative Examples.
In Example 4 where the crystal index exceeded 120, the stability of the crystal structure of the cathode active material was relatively lowered compared to those from other Examples. Accordingly, the stability of the crystal structure of the cathode active material was relatively lowered at high temperature.
In Example 5 where L(110) was less than 120 nm, the structural stability of the cathode active material was relatively lowered compared to those from other Examples. Accordingly, the structural stability of the cathode active material was relatively lowered at high temperature.
In Example 6 where L(110) exceeded 300 nm, the structural stability of the cathode active material was relatively lowered compared to those from other Examples. Accordingly, the structural stability of the cathode active material was relatively lowered at high temperature.

In Example 7 having L(003) of less than 300 nm, generation of cracks in the cathode active material was relatively increased compared to those from Examples. Accordingly, the stability at high temperature was relatively degraded.

**Claims**

1. A cathode active material for a lithium secondary battery comprising a lithium-transition metal oxide particle that has a crystal index (CI) defined by Equation 1 of 15 or more:

[Equation 1]

$$CI = \frac{L(003) \times L(110)}{\eta \times 10000}$$

wherein, in Equation 1, CI is the crystal index, L(003) is a crystallite size (nm) in a (003) plane direction of the lithium-transition metal oxide particle measured through an X-ray diffraction (XRD) analysis, L(110) is a crystallite size (nm) in a (110) plane direction of the lithium-transition metal oxide particle measured through the XRD analysis, and $\eta$ is a lattice strain (dimensionless number) calculated by applying a Williamson-Hall method defined by Equation 2 to peaks of the lithium-transition metal oxide particle obtained from the XRD analysis,

[Equation 2]

$$\beta\cos\theta = \eta\sin\theta + \lambda/D$$

wherein, in Equation 2, $\beta$ is a full width at half maximum (rad) of a peak of the lithium-transition metal oxide particle obtained by the XRD analysis, $\theta$ is a diffraction angle (rad), and $\eta$ is the lattice strain (dimensionless number), $\lambda$ represents an X-ray wavelength (Å), and D represents a crystallite size (Å).

2. The cathode active material for a lithium secondary battery of claim 1, wherein the lattice strain of the lithium-transition metal oxide particle is a slope of a straight line calculated by obtaining full widths at half maximum of all peaks in the XRD analysis, substituting the obtained full widths at half maximum into Equation 2, and plotting with $\sin\theta$ as a horizontal axis and $\beta\cos\theta$ as a vertical axis.

3. The cathode active material for a lithium secondary battery of claim 1 or claim 2, wherein L(003) of Equation 1 is measured by Equation 3 below:

[Equation 3]

$$L(003) = \frac{0.9\lambda}{\beta\cos\theta}$$

wherein, in Equation 3 above, L(003) represents the crystallite size (nm) in the (003) plane direction of the lithium-transition metal oxide particle, $\lambda$ represents an X-ray wavelength (nm), $\beta$ represents a full width at half maximum (FWHM) (rad) of a peak corresponding to the (003) plane of the lithium-transition metal oxide particle, and $\theta$ represents a diffraction angle (rad).

4. The cathode active material for a lithium secondary battery of any one of claims 1 to 3, wherein L (110) in Equation 1 is measured by Equation 4 below:

[Equation 4]

$$L(110) = \frac{0.9\lambda}{\beta\cos\theta}$$

wherein, in Equation 4 above, L(110) represents the crystallite size (nm) in the (110) plane direction of the lithium-transition metal oxide particle, $\lambda$ represents an X-ray wavelength (nm), $\beta$ represents a full width at half maximum (FWHM) (rad) of a peak corresponding to the (110) plane of the lithium-transition metal oxide particle, and $\theta$ represents a diffraction angle (rad).

5. The cathode active material for a lithium secondary battery of any one of claims 1 to 4, wherein the crystal index is in a range from 15 to 120.

6. The cathode active material for a lithium secondary battery of any one of claims 1 to 5, wherein L(003) in Equation 1 is 300 nm or more.

7. The cathode active material for a lithium secondary battery of any one of claims 1 to 6, wherein L(003) in Equation 1 is in a range from 320 nm to 420 nm.

8. The cathode active material for a lithium secondary battery of any one of claims 1 to 7, wherein L(110) in Equation 1 is in a range from 120 nm to 300 nm.

9. The cathode active material for a lithium secondary battery of any one of claims 1 to 8, wherein $\eta$ in Equation 1 is 0.18 or less.

10. The cathode active material for a lithium secondary battery of any one of claims 1 to 9, wherein the lithium-transition metal oxide particle includes a polycrystalline structure in a crystallographic aspect.

11. The cathode active material for a lithium secondary battery of any one of claims 1 to 10, wherein the lithium-transition metal oxide particle has a composition represented by Chemical Formula 1-1:

[Chemical Formula 1-1]     $Li_xNi_aM1_{b1}M2_{b2}O_{2+z}$

wherein, in Chemical Formula 1-1, $0.9 \leq x \leq 1.2$, $0.5 \leq a \leq 0.99$, $0.01 \leq b1+b2 \leq 0.5$, $-0.5 \leq z \leq 0.1$, M1 includes at least one of Co, Mn and Al, and M2 includes at least one of Na, Ca, Nb, Ta, Mo, Zr, Ti, Cr, Cu, Zn, Sn, Ge, Ga, B, Mg, Ba, Si, Y, W, V and Sr.

12. The cathode active material for a lithium secondary battery of claim 11, wherein M1 in Chemical Formula 1-1 includes Co and Mn.

13. A lithium secondary battery, comprising:

a cathode including the cathode active material for a lithium secondary battery of any one of claims 1 to 12; and
an anode facing the cathode.

# FIG. 1

# FIG. 2

# FIG. 3

# FIG. 4

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/013472 A1 (MITSUMOTO TETSUYA [JP] ET AL) 14 January 2016 (2016-01-14) * paragraphs [0058] - [0060]; claims * | 1-13 | INV. C01G53/00 H01M4/525 |
| X | US 2022/052332 A1 (LEE SANG HAN [KR] ET AL) 17 February 2022 (2022-02-17) * claims; examples * | 1-13 | |
| X | FAN GUANGXIN ET AL: "An insight into the influence of crystallite size on the performances of microsized spherical Li(Ni0.5Co0.2Mn0.3)O2cathode material composed of aggregated nanosized particles", JOURNAL OF NANOPARTICLE RESEARCH, SPRINGER NETHERLANDS, DORDRECHT, vol. 20, no. 2, 16 February 2018 (2018-02-16), pages 1-12, XP036431416, ISSN: 1388-0764, DOI: 10.1007/S11051-018-4147-0 [retrieved on 2018-02-16] * Abstract, "Differential scanning calorimetry"; figures * | 1-13 | |
| X | KR 2023 0063562 A (SK ON CO LTD [KR]) 9 May 2023 (2023-05-09) * paragraph [0075]; claims; tables 2-3 * | 1-13 | |
| X | US 2018/198122 A1 (HIRATSUKA HIDEKAZU [JP] ET AL) 12 July 2018 (2018-07-12) * paragraph [0049]; claims * | 1-13 | |

**TECHNICAL FIELDS SEARCHED (IPC)**

C01G
H01M

The present search report has been drawn up for all claims

| Place of search | Date of completion of the search | Examiner |
|---|---|---|
| Munich | 8 October 2024 | Marucci, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 6342

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2024

| Patent document cited in search report | Publication date | Patent family member(s) | Publication date |
|---|---|---|---|
| US 2016013472 A1 | 14-01-2016 | JP 5847352 B2 | 20-01-2016 |
| | | JP 2016041653 A | 31-03-2016 |
| | | JP WO2014136760 A1 | 09-02-2017 |
| | | KR 20150103103 A | 09-09-2015 |
| | | US 2016013472 A1 | 14-01-2016 |
| | | WO 2014136760 A1 | 12-09-2014 |
| US 2022052332 A1 | 17-02-2022 | CN 113644255 A | 12-11-2021 |
| | | CN 116230922 A | 06-06-2023 |
| | | EP 3957607 A1 | 23-02-2022 |
| | | KR 102293046 B1 | 24-08-2021 |
| | | US 2022052332 A1 | 17-02-2022 |
| | | US 2023223527 A1 | 13-07-2023 |
| KR 20230063562 A | 09-05-2023 | NONE | |
| US 2018198122 A1 | 12-07-2018 | CN 104603996 A | 06-05-2015 |
| | | JP 6174047 B2 | 02-08-2017 |
| | | JP WO2014103166 A1 | 12-01-2017 |
| | | US 2015243982 A1 | 27-08-2015 |
| | | US 2018198122 A1 | 12-07-2018 |
| | | WO 2014103166 A1 | 03-07-2014 |

EPO FORM P0459

For more details about this annex : see Official Journal of the European Patent Office, No. 12/82